# EUROPÄISCHE PATENTSCHRIFT

(11) **EP 2 601 754 B1**
(45) Veröffentlichungstag und Bekanntmachung des Hinweises auf die Patenterteilung: **15.03.2017**
(21) Anmeldenummer: 11746198.8
(22) Anmeldetag: 22.07.2011
(51) Int. Cl.: H04L 1/14

(54) **KOMMUNIKATIONSVERFAHREN MIT ECHO**
ECHO-BASED KOMMUNICATION METHOD
PROCÉDÉ DE COMMUNICATION À LA BASE D'ÉCHO

(30) Priorität: 03.08.2010 DE 102010038852
(43) Veröffentlichungstag der Anmeldung: 12.06.2013
(73) Patentinhaber: Continental Teves AG & Co. oHG, 60488 Frankfurt (DE)
(72) Erfinder: SCHRIEFER, Jörn, 64347 Griesheim (DE); SCHERSCHMIDT, Jürgen, 60322 Frankfurt (DE); PEICHL, Thomas, 61206 Wöllstadt (DE)
(74) Vertreter: Brand, Markus
(86) Internationale Anmeldenummer: PCT/EP2011/062685
(87) Internationale Veröffentlichungsnummer: WO 2012/016867

(56) Entgegenhaltungen:
- US-B1- 6 327 688
- US-B1- 7 373 322

## Beschreibung

Die Erfindung betrifft ein Kommunikationsverfahren gemäß Oberbegriff von Anspruch 1 sowie ein Kommunikationssystem gemäß Oberbegriff von Anspruch 11.

Aus der US 6327688 B1 sind in diesem Zusammenhang ein Daten-bus mit automatischer Datenverifikationsprüfung ein Verifikationsverfahren bekannt. Dabei ist ein Datenbussystem der-art ausgebildet, dass ein an den Datenbus angeschlossener Empfänger, welcher eine Botschaft empfängt, stets mit dem Senden einer Prüfinformation an den Absender der Botschaft antwortet. Der Absender liest die Prüfinformation aus und verwendet sie zur Verifizierung der Integrität der zwischen dem Absender und dem Empfänger übertragenen Daten. Die Prüf-information kann dabei entweder vom Empfänger auf Basis der übertragenen Daten erstellt werden, oder aber der Empfänger sendet einfach die an die empfangenen Daten angehängte Prüfinformation zurück an den Absender.

Die Erfindung hat sich die Aufgabe gestellt, ein Kommunikationsverfahren sowie ein entsprechendes Kommunikationssystem vorzuschlagen, welches für sicherheitskritische Applikationen geeignet ist.

Diese Aufgabe wird erfindungsgemäß gelöst durch das Verfahren gemäß Anspruch 1 sowie das elektronische Kommunikations-system gemäß Anspruch 11.

Eine Botschaft umfasst vorzugsweise zumindest ein oder mehrere Datenworte und/oder ein oder mehrere Befehlsworte und/oder wenigstens ein Adresswort, wobei diese Worte insbesondere Daten sind, die innerhalb der Botschaft einen definierten Zusammenhang aufweisen.

Unter einer abgeleiteten Information wird eine abhängige Information bzw. eine durch datenverarbeitungstechnische und/oder mathematische Schritte abhängige Information verstanden.

Vorzugsweise sind die erste Kommunikationseinheit und die zweite Kommunikationseinheit mittels genau einer Datenleitung als Kommunikationsstrecke miteinander verbunden.

Die erste Kommunikationseinheit sendet wenigstens eine erste Botschaft bzw. einen ersten Befehl an die zweite Kommunikationseinheit, der mindestens eine Adressinformation und/oder eine Befehlsinformation aufweist. Insbesondere weist der erste Befehl bzw. die erste Botschaft zusätzlich eine Dateninformation auf. Es ist zweckmäßig, dass dieser erste Befehl zusätzlich eine Prüfinformation umfasst, welche wenigstens teilweise von der Adressinformation und/oder Befehlsinformation abhängt, also bezüglich der Adressinformation und/oder Befehlsinformation und insbesondere zusätzlich bezüglich der Befehlsinformation redundant ist.

Die zweite Kommunikationseinheit sendet als Antwort auf die erste Botschaft bzw. den ersten Befehl, insbesondere direkt bzw. unverzüglich, eine erste Antwortbotschaft an die erste Kommunikationseinheit. Diese erste Antwortbotschaft umfasst Dateninformationen sowie zusätzlich eine von der Adressinformation und/oder der Befehlsinformation abhängige bzw. abgeleitete Information, wobei diese von der Adressinformation und/oder Befehlsinformation des ersten Befehls abhängige Information als Teil einer Prüfinformation ausgebildet ist.

Die Adressinformation und/oder die Befehlsinformation und/oder die Dateninformation und/oder die Prüfinformation sind zweckmäßigerweise jeweils als Datenblock innerhalb des Datenworts der entsprechenden Botschaft bzw. des entsprechenden Befehls bzw. der entsprechenden Antwortbotschaft ausgebildet.

Innerhalb der Antwortbotschaft der zweiten Kommunikationseinheit, ist die von der Adressinformation und/oder Befehlsinformation des ersten Befehls abgeleitete Information als Teil einer Prüfinformation ausgebildet.

Es ist bevorzugt, dass die erste Botschaft oder der erste Befehl der ersten Kommunikationseinheit zusätzlich eine Prüfinformation umfasst, welche wenigstens teilweise von der Adressinformation und/oder Befehlsinformation abgeleitet ist, also bezüglich der Adressinformation und/oder Befehlsinformation redundant ist.

Es ist zweckmäßig, dass die Prüfinformation des ersten Befehls oder der ersten Botschaft und/oder der ersten Antwortbotschaft als Korrekturinformation ausgebildet ist, deren Code eine entsprechende bzw. definierte Mindest-Hamming-Distanz aufweist.

Die Prüfinformation des ersten Befehls oder der ersten Botschaft und/oder der ersten Antwortbotschaft ist vorzugsweise als zyklische Redundanzprüfung bzw. CRC (cyclic redundancy check) ausgebildet.

Es ist bevorzugt, dass die erste Antwortbotschaft so ausgebildet ist, dass die Adressinformation und/oder Befehlsinformation der ersten Botschaft oder des ersten Befehls in die erste Antwortbotschaft zumindest teilweise hineincodiert ist.

Es ist zweckmäßig, dass die erste Antwortbotschaft zusätzlich zumindest einen Teil der Dateninformation redundant beinhaltet, also beispielsweise ein oder mehrere Fehlerbits und/oder Statusbits, direkt und zusätzlich davon abhängig, insbesondere invertiert, überträgt.

Die Antwortbotschaft umfasst einen Teil der Dateninformation mehrfach redundant, mindestens einmal redundant in der Dateninformation selbst und in die Prüfinformation eingerechnet.

Es ist zweckmäßig, dass jede Botschaft bzw. jeder Befehl der ersten Kommunikationseinheit an die zweite Kommunikationseinheit, die/der eine Adresseinformation und/oder eine Befehlsinformation beinhaltet, von der zweiten Kommunikationseinheit durch eine Antwortbotschaft gemäß der ersten Antwortbotschaft beantwortet wird.

Die Erfindung betrifft außerdem die Verwendung des elektronischen Kommunikationssystems in Kraftfahrzeugen.

Es zeigen in schematischer Darstellung
Fig. 1 eine beispielhafte Kommunikation in zwei Varianten a) und b) zwischen der ersten Kommunikationseinheit A und zweiten Kommunikationseinheit B, wobei die erste Kommunikationseinheit A einen ersten Befehl 1 an die zweite Kommunikationseinheit B überträgt und diese mit einer ersten Antwortbotschaft 2, 3 darauf antwortet, sowie
Fig. 2 eine alternativ beispielhafte erste Antwortbotschaft 4, 5 der zweiten Kommunikationseinheit B an die erste Kommunikationseinheit A, als Reaktion auf eine erste Botschaft bzw. einen ersten Befehl gemäß Fig. 1 a) und b).

Dabei umfasst Datenwort 1 als erste Botschaft bzw. erster Befehl der ersten Kommunikationseinheit A einen Befehlsdatenblock CMD mit einer Befehlsinformation, einen Adressdatenblock ADDR mit einer Adressinformation sowie einen Prüfdatenblock CRC, mit einer Prüfinformation, abhängig von CMD und ADDR, als zyklische Redundanzprüfung ausgebildet.

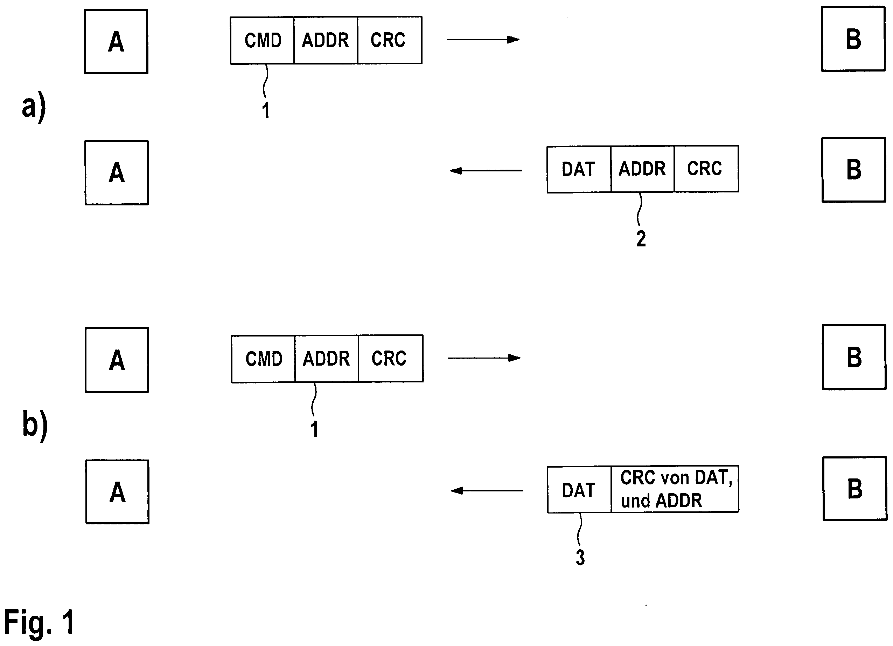

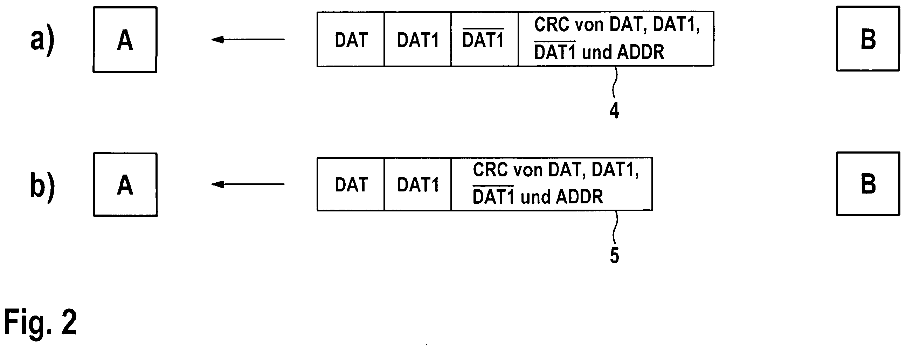

Datenworte 2, 3, 4, 5 als jeweils beispielgemäße erste Antwortbotschaft der zweiten Kommunikationseinheit B umfasst einen Datenwort DAT mit einer Dateninformation. Datenwort 2 aus Fig. 1 a) weist zusätzlich den Adressdatenblock ADDR mit der Adressinformation der ersten Botschaft 1 der Kommunikationseinheit A als eine Art Wiederholung bzw. Echo auf sowie einen Prüfdatenblock CRC, abhängig von DAT und ADDR, als zyklische Redundanzprüfung ausgebildet. Datenwort 3 aus Fig. 1 b) weist zusätzlich zum Datenwort DAT nur einen Prüfdatenblock CRC auf, der abhängig von DAT sowie abhängig von der Adressinformation des ersten Befehls codiert ist. In Fig. 2 a) weist das Datenwort 4 zusätzlich zum Datenwort DAT noch eine weitere, redundante Dateninformation, beispielsweise eine Fehler- und Statusinformation, als redundante, invertiert zueinander codierte Datenworte DAT1 und *̅D̅A̅T̅*̅1̅ auf, sowie einen Prüfdatenblock CRC, der abhängig von DAT, DAT1, *̅D̅A̅T̅*̅1̅ und abhängig von der Adressinformation des ersten Befehls codiert ist, beispielgemäß als zyklische Redundanzprüfung ausgebildet. Ausgehend von Datenwort 4 weist Datenwort 5 aus Fig. 2 b) nur DAT und DAT1 sowie Prüfdatenblock CRC auf, der in diesem Fall ebenfalls abhängig von DAT, DAT1, *̅D̅A̅T̅*̅1̅ und abhängig von der Adressinformation des ersten Befehls codiert ist, beispielgemäß ebenfalls als zyklische Redundanzprüfung ausgebildet.

Die redundanten Datenworte DAT und DAT1 sind beispielgemäß Datenworte mit ähnlichem bzw. im Wesentlichen gleichen Informationsinhalt, welche aus zwei Messpfaden eines Sensors bereitgestellt werden, wobei diese beiden Messpfade redundant ausgelegt sind und deshalb ähnliche Informationen liefern.

## Patentansprüche

1. Kommunikationsverfahren in einem Kommunikationssystem, umfassend eine erste (A) und eine zweite Kommunikationseinheit (B), welche miteinander über mindestens eine erste Kommunikationsstrecke verbunden sind, wobei die erste Kommunikationseinheit (A) wenigstens eine erste Botschaft (1) an die zweite Kommunikationseinheit (B) sendet, wonach die zweite Kommunikationseinheit (B) als Antwort auf die erste Botschaft eine erste Antwortbotschaft (2, 3, 4, 5) an die erste Kommunikationseinheit sendet,
**dadurch gekennzeichnet, dass** die erste Botschaft (1) wenigstens eine Adressinformation (ADDR) und/oder eine Befehlsinformation (CMD) umfasst, wobei die erste Antwortbotschaft (2, 3, 4, 5) wenigstens eine von der Adressinformation (ADDR) und/ oder Befehlsinformation (CMD) abgeleitete Information als Teil einer Prüfinformation (CRC) sowie eine Dateninformation (DAT) und einen Teil der Datenin-formation mindestens einmal redundant (DAT1) in der Dateninformation selbst und in die Prüfinformation (CRC) eingerechnet umfasst.

2. Kommunikationsverfahren nach Anspruch 1, **dadurch gekennzeichnet, dass** die erste Kommunikationseinheit (A) und die zweite Kommunikationseinheit (B) mittels genau einer Datenleitung als Kommunikationsstrecke miteinander verbunden sind.

3. Kommunikationsverfahren nach Anspruch 1 oder 2, **dadurch gekennzeichnet, dass** innerhalb der Antwortbotschaft (2, 3, 4, 5) der zweiten Kommunikationseinheit (B), die von der Adressinformation (ADDR) und/oder Befehlsinformation (CMD) der ersten Botschaft (1) abgeleitete Information als Teil einer Prüfinformation (CRC) ausgebildet ist.

4. Kommunikationsverfahren nach mindestens einem der Ansprüche 1 bis 3, **dadurch gekennzeichnet, dass** die erste Botschaft (1) der ersten Kommunikationseinheit (A) außerdem eine Dateninformation aufweisen.

5. Kommunikationsverfahren nach mindestens einem der Ansprüche 1 bis 4, **dadurch gekennzeichnet, dass** die erste Botschaft (1) der ersten Kommunikationseinheit (A) zusätzlich eine Prüfinformation (CRC) umfasst, welche wenigstens teilweise von der Adressinformation (ADDR) und/oder Befehlsinformation (CMD) abgeleitet ist, also bezüglich der Adressinformation und/oder Befehlsinformation (CMD) und insbesondere zusätzlich bezüglich der Befehlsinformation redundant ist.

6. Kommunikationsverfahren nach mindestens einem der Ansprüche 1 bis 5, **dadurch gekennzeichnet, dass** die Prüfinformation (CRC) der ersten Botschaft (1) und/oder der ersten Antwortbotschaft (2, 3, 4, 5) als Korrekturinformation ausgebildet ist, deren Code eine entsprechende Mindest-Hamming-Distanz aufweist.

7. Kommunikationsverfahren nach mindestens einem der Ansprüche 1 bis 6, **dadurch gekennzeichnet, dass** die Prüfinformation (CRC) der ersten Botschaft und/oder der ersten Antwortbotschaft als zyklische Redundanzprüfung bzw. CRC (cyclic redundancy check) ausgebildet ist.

8. Kommunikationsverfahren nach mindestens einem der Ansprüche 1 bis 7, **dadurch gekennzeichnet, dass** die erste Antwortbotschaft (2, 3, 4, 5) so ausgebildet ist, dass die Adressinformation (ADDR) und/oder die Befehlsinformation (CMD) der ersten Botschaft in die erste Antwortbotschaft zumindest teilweise hineincodiert ist.

9. Kommunikationsverfahren nach mindestens einem der Ansprüche 1 bis 8, **dadurch gekennzeichnet, dass** die erste Antwortbotschaft (2, 3, 4, 5) zusätzlich zumindest einen Teil der Dateninformation (DAT1) redundant beinhaltet, also beispielsweise ein oder mehrere Fehlerbits und/oder Statusbits, direkt und zusätzlich davon abhängig, insbesondere invertiert (*̅D̅A̅T̅*̅1̅), überträgt.

10. Kommunikationsverfahren nach mindestens einem der Ansprüche 1 bis 9, **dadurch gekennzeichnet, dass** jede Botschaft (1) der ersten Kommunikationseinheit (A) an die zweite Kommunikationseinheit (B), die/der eine Adressinformation (ADDR) und/oder eine Befehlsinformation (CMD) beinhaltet, von der zweiten Kommunikationseinheit (B) durch eine Antwortbotschaft (2, 3, 4, 5) gemäß der ersten Antwortbotschaft beantwortet wird.

11. Elektronisches Kommunikationssystem, umfassend eine erste (A) und eine zweite Kommunikationseinheit (B), welche miteinander über mindestens eine erste Kommunikationsstrecke verbunden sind, **dadurch gekennzeichnet, dass** das Kommunikationssystem so ausgebildet ist, dass es das Kommunikationsverfahren nach mindestens einem der Ansprüche 1 bis 10 ausführen kann.

## Claims

1. Communication method in a communication system comprising a first (A) and a second (B) communication unit which are connected to one another via at least one first communication path, wherein the first communication unit (A) sends at least one first message (1) to the second communication unit (B), after which the second communication unit (B) sends, as a response to the first message, a first response message (2, 3, 4, 5) to the first communication unit, **characterized in that** the first message (1) comprises at least one address information item (ADDR) and/or one command information item (CMD), wherein the first response message (2, 3, 4, 5) comprises at least one information item derived from the address information (ADDR) and/or command information (CMD) as part of a test information item (CRC) and also one data information item (DAT) and a part of the data information at least once redundantly (DAT1) in the data information itself and included in the test information (CRC).

2. Communication method according to Claim 1, **characterized in that** the first communication unit (A) and the second communication unit (B) are connected to one another by means of precisely one data line as communication path.

3. Communication method according to Claim 1 or 2, **characterized in that** within the response message (2, 3, 4, 5) of the second communication unit (B), the information derived from the address information (ADDR) and/or command information (CMD) of the first message (1) is formed as part of a test information item (CRC).

4. Communication method according to at least one of Claims 1 to 3, **characterized in that** the first message (1) of the first communication unit (A) also has a data information item.

5. Communication method according to at least one of Claims 1 to 4, **characterized in that** the first message (1) of the first communication unit (A) additionally comprises a test information item (CRC) which is derived at least partially from the address information (ADDR) and/or command information (CMD), that is to say is redundant with respect to the address information and/or command information (CMD) and especially additionally with respect to the command information.

6. Communication method according to at least one of Claims 1 to 5, **characterized in that** the test information (CRC) of the first message (1) and/or of the first response message (2, 3, 4, 5) is formed as correction information, the code of which has a corresponding minimum Hamming distance.

7. Communication method according to at least one of Claims 1 to 6, **characterized in that** the test information (CRC) of the first message and/or of the first response message is formed as a cyclic redundancy check or CRC.

8. Communication method according to at least one of Claims 1 to 7, **characterized in that** the first response message (2, 3, 4, 5) is formed in such a manner that the address information (ADDR) and/or the command information (CMD) of the first message is coded at least partially into the first response message.

9. Communication method according to at least one of Claims 1 to 8, **characterized in that** the first response message (2, 3, 4, 5) contains additionally at least a part of the data information (DAT1) redundantly, that is to say transmits, for example, one or more error bits and/or status bits directly and additionally dependently thereon, especially inverted (*̅D̅A̅T̅*̅1̅).

10. Communication method according to at least one of Claims 1 to 9, **characterized in that** each message (1) of the first communication unit (A) to the second communication unit (B), which contains an address information item (ADDR) and/or a command information item (CMD), is answered by the second communication unit (B) with a response message (2, 3, 4, 5) in accordance with the first response message.

11. Electronic communication system comprising a first (A) and a second (B) communication unit which are connected to one another via at least one first communication path, **characterized in that** the communication system is constructed in such a manner that it can execute the communication method according to at least one of Claims 1 to 10.

## Revendications

1. Procédé de communication dans un système de communication, comprenant une première (A) et une deuxième unité de communication (B) qui sont reliées l'une à l'autre par le biais d'au moins un premier trajet de communication, la première unité de communication (A) envoyant au moins un premier message (1) à la deuxième unité de communication (B), après quoi la deuxième unité de communication (B) envoie en tant que réponse au premier message un premier message de réponse (2, 3, 4, 5) à la première unité de communication,
**caractérisé en ce que** le premier message (1) comprend au moins une information d'adresse (ADDR) et/ou une information d'instruction (CMD), le premier message de réponse (2, 3, 4, 5) comprenant au moins une information dérivée de l'information d'adresse (ADDR) et/ou de l'information d'instruction (CMD) en tant que partie d'une information de contrôle (CRC) ainsi qu'une information de données (DAT) et une partie de l'information de données au moins une fois redondante (DAT1) incluse dans l'information de données elle-même et dans l'information de contrôle (CRC).

2. Procédé de communication selon la revendication 1, **caractérisé en ce que** la première unité de communication (A) et la deuxième unité de communication (B) sont reliées l'une à l'autre au moyen d'exactement une ligne de données faisant office de trajet de communication.

3. Procédé de communication selon la revendication 1 ou 2, **caractérisé en ce qu'**à l'intérieur du message de réponse (2, 3, 4, 5) de la deuxième unité de communication (B), l'information dérivée de l'information d'adresse (ADDR) et/ou de l'information d'instruction (CMD) du premier message (1) est réalisée sous la forme d'une partie d'une information de contrôle (CRC).

4. Procédé de communication selon au moins l'une des revendications 1 à 3, **caractérisé en ce que** le premier message (1) de la première unité de communication (A) présente en outre une information de données.

5. Procédé de communication selon au moins l'une des revendications 1 à 4, **caractérisé en ce que** le premier message (1) de la première unité de communication (A) comprend en plus une information de contrôle (CRC) qui est dérivée au moins partiellement de l'information d'adresse (ADDR) et/ou de l'information d'instruction (CMD), c'est-à-dire qui est redondante par rapport à l'information d'adresse (ADDR) et/ou l'information d'instruction (CMD) et notamment en plus par rapport à l'information d'instruction.

6. Procédé de communication selon au moins l'une des revendications 1 à 5, **caractérisé en ce que** l'information de contrôle (CRC) du premier message (1) et/ou du premier message de réponse (2, 3, 4, 5) est réalisée sous la forme d'une information de correction dont le code présente une distance de Hamming minimale correspondante.

7. Procédé de communication selon au moins l'une des revendications 1 à 6, **caractérisé en ce que** l'information de contrôle (CRC) du premier message et/ou du premier message de réponse est réalisée sous la forme d'un contrôle de redondance cyclique ou CRC (en anglais cyclic redundancy check).

8. Procédé de communication selon au moins l'une des revendications 1 à 7, **caractérisé en ce que** le premier message de réponse (2, 3, 4, 5) est réalisé de telle sorte que l'information d'adresse (ADDR) et/ou l'information d'instruction (CMD) du premier message est au moins partiellement intégrée par codage dans le premier message de réponse.

9. Procédé de communication selon au moins l'une des revendications 1 à 8, **caractérisé en ce que** le premier message de réponse (2, 3, 4, 5) contient en redondance en plus au moins une partie de l'information de données (DAT1), c'est-à-dire qu'il transmet par exemple un ou plusieurs bits de défaut et/ou bits d'état, directement et en plus indépendamment de celui-ci, notamment inversés (*̅D̅A̅T̅*̅1̅).

10. Procédé de communication selon au moins l'une des revendications 1 à 9, **caractérisé en ce que** chaque message (1) de la première unité de communication (A) à la deuxième unité de communication (B) qui contient une information d'adresse (ADDR) et/ou une information d'instruction (CMD) reçoit une réponse de la part de la deuxième unité de communication (B) par un message de réponse (2, 3, 4, 5) conformément au premier message de réponse.

11. Système de communication électronique comprenant une première (A) et une deuxième unité de communication (B) qui sont reliées l'une à l'autre par le biais d'au moins un premier trajet de communication, **caractérisé en ce que** le système de communication est réalisé de telle sorte qu'il peut mettre en oeuvre le procédé de communication selon au moins l'une des revendications 1 à 10.
